Europäisches Patentamt

European Patent Office

Office européen des brevets

(11) Publication number: **0 068 810**

**B1**

(12) **EUROPEAN PATENT SPECIFICATION**

(45) Date of publication of patent specification: **11.03.87**

(21) Application number: **82303278.4**

(22) Date of filing: **23.06.82**

(51) Int. Cl.⁴: **H 04 N 9/64**

(54) **Colour video signal processing apparatus.**

(30) Priority: **30.06.81 JP 101689/81**

(43) Date of publication of application:
**05.01.83 Bulletin 83/01**

(45) Publication of the grant of the patent:
**11.03.87 Bulletin 87/11**

(84) Designated Contracting States:
**AT DE FR GB IT NL**

(56) References cited:
**GB-A-1 580 724**
**GB-A-2 051 517**

(73) Proprietor: **SONY CORPORATION**
**7-35 Kitashinagawa 6-Chome Shinagawa-ku**
**Tokyo 141 (JP)**

(72) Inventor: **Asaida, Takashi**
**2578-1-207, Tsumada**
**Atsugi-shi Kanagawa-ken (JP)**

(74) Representative: **Thomas, Christopher Hugo**
**et al**
**D Young & Co 10 Staple Inn**
**London WC1V 7RD (GB)**

Courier Press, Leamington Spa, England.

# Description

This invention relates to colour video signal processing apparatus.

When digitally processing output colour signals derived from colour imagers so as to form digitized colour difference signals, the colour signals are limited to a predetermined band width by a digital low-pass filter.

In general, a colour signal has a frequency band ranging from 0 to 4 MHz, and its band can be restricted to some extent without causing any problems. For example, signals I and Q are transmitted with bands of 1.5 MHz and 0.5 MHz, respectively. In the case of a digital low-pass filter, the smaller the ratio $f_c/f_s$ (where $f_c$ is a cut-off frequency and $f_s$ is a driving clock frequency) becomes, the more complex its transfer function becomes. Thus the order of the filter must be increased, and so the circuit arrangement becomes complicated. The sampling frequency used when a colour video signal is digitized is usually $3f_{sc}$ or $4f_{sc}$ (where $f_{sc}$ is the colour subcarrier frequency). In consequence, the frequency ratio $f_c/f_s$ tends to be small.

However, since the Nyquist frequencies for the signals I and Q are 1 MHz and 2 MHz, respectively, it is not really necessary to transmit data at the sampling frequency of $4f_{sc}$, which is equal to nearly 14.3 MHz.

UK Patent Specification GB—A—2 051 517 discloses a digital television transmission system in which in a coder, Y, U and V component signals are digitised and the U and V signal multiplexed. The resulting chrominance signal is multiplexed into the luminance signal by replacing every third luminance sample by a chrominance sample.

According to the present invention there is provided a colour video signal processing apparatus supplied with luminance data and first and second colour diffence data, each being digitized at a first sampling frequency and formed by matrix calculations, the apparatus comprising:

sampling means for sampling at least one of said and second colour difference data at a second sampling frequency which is equal to said first sampling frequency which is equal to said first sampling frequency divided by an integer; and a digital filter to limit the band of the output from said sampling means to be a predetermined band;

said luminance data and said first and second colour difference data whose bands have been limited by said digital filter then being transmitted or recorded.

The invention will now be described by way of example with reference to the accompanying drawings, in which:

Figures 1 and 3 are block diagrams respectively showing the transmitting and receiving sides of a colour video signal processing apparatus according to the invention;

Figures 2A to 2G and 4A to 4C are frequency spectrums used to explain the operation of the signal processing apparatus of Figures 1 and 3;

Figures 5 and 6 are block diagrams of respective digital filters which can be employed in the signal processing apparatus of Figures 1 and 3;

Figures 7 and 8 are block diagrams respectively showing the transmitting and receiving sides of another colour video signal processing apparatus according to the invention; and

Figures 9A to 9G and 10A to 10E are frequency spectrums used to explain the operation of the signal processing apparatus of Figures 7 and 8.

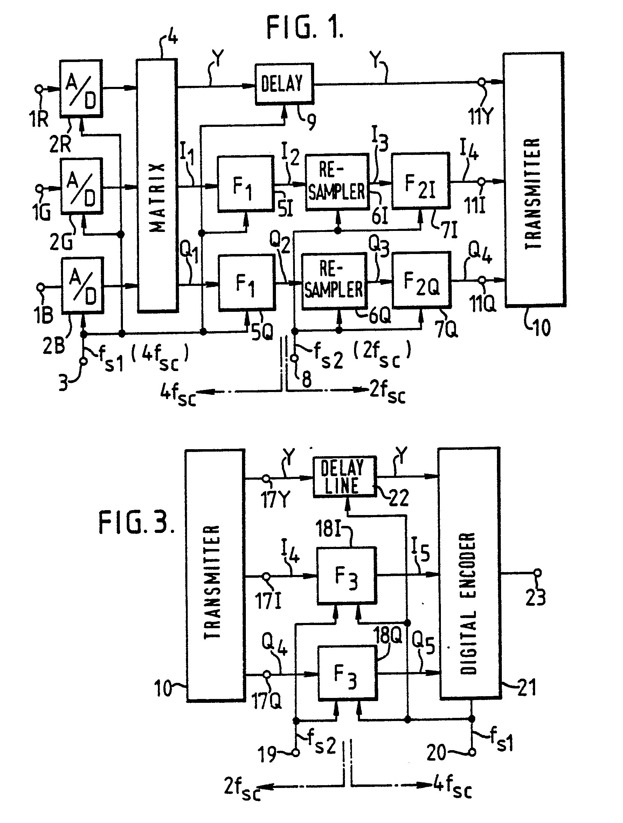

Referring to Figure 1, in the first apparatus to be described, a colour video signal is transmitted or recorded while divided into three components corresponding respectively to luminance data Y and first and second colour difference data I and Q.

To input terminals 1R, 1G and 1B there are respectively supplied a red signal (R signal), a green signal (G signal) and a blue signal (B signal), which are supplied to analog-to-digital (A/D) converts 2R, 2G and 2B to be digitized therein. Each of the A/D converters 2R, 2G and 2B is supplied with a sampling block pulse signal with a frequency of $f_{s1}$ (which equals $4f_{sc}$) from a terminal 3. R, G and B data derived from the A/D converters 2R, 2G and 2B are supplied to a matrix circuit 4, from which luminance data Y and colour difference data $I_1$ and $Q_1$ are derived. Alternatively, the matrix calculation can be carried out on the analog signals, which are then digitized.

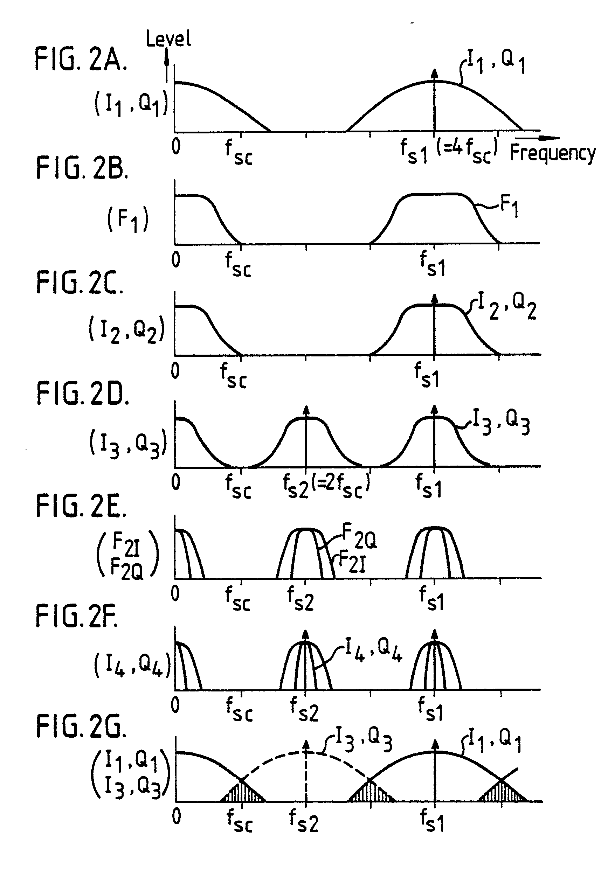

Figure 2A shows a frequency band of the colour difference data $I_1$ and $Q_1$, each derived from the matrix circuit 4.

The colour difference signal data $I_1$ and $Q_1$ are respectively supplied through digital filters 5I and 5Q, each having a filter characteristic $F_1$, to re-sampling circuits 6I and 6Q. Each of the digital filters 5I and 5Q operates with sampling clock pulse signal of frequency $f_{s1}$, which is used as the pre-filter for the re-sampling operation at the next stage and whose filter characteristic $F_1$ is as shown in Figure 2B. Each of the digital filters 5I and 5Q is provided to limit the band so as to avoid the generation of aliasing noise upon re-sampling, and its filter characteristic $F_1$ is therefore determined in dependence on a clock frequency $f_{s2}$ (for instance, $2f_{sc}$) used in the re-sampling operation and supplied to each of the re-sampling circuits 6I and 6Q from a terminal 8. In this example, the filter characteristic $F_1$ is arranged in such a way as to have a pass band from 0 to 1.5 MHz and also to have a stop band from $f_{s2}$ to $f_{s2}$—1.5 MHz. In other words, when the colour difference data are not passed through the pre-filters 5I and 5Q, sampling side bands $I_3$ and $Q_3$, each centred at $2f_{sc}$, and the original signals $I_1$ and $Q_1$ are superimposed on one another by the re-sampling operation as shown by hatching in Figure 2G, thus causing aliasing noise. For the frequency for the re-sampling operation, a frequency sufficient to satisfy the Nyquist conditions relative to the signals I and Q is used.

The re-sampling circuits 6I and 6Q produce at their outputs colour difference data $I_3$ and $Q_3$,

each of which is distributed over a frequency range some integral times the base band, with the sampling frequency $f_{s2}$ as its centre as shown in Figure 2D.

The colour difference data $I_3$ and $Q_3$ are respectively supplied to digital filters 7I and 7Q. The digital filters 7I and 7Q operate with the clock pulse signal $f_{s2}$, and have filter characteristics $F_{2I}$ and $F_{2Q}$ as illustrated in Figure 2E. The filter characteristic $F_{2I}$ has a pass band from 0 to 1.5 MHz, while the filter characteristic $F_{2Q}$ has a pass band from 0 to 0.5 MHz. At the respective outputs of the digital filters 7I and 7Q, there appear colour difference data $I_4$ and $Q_4$ shown in Figure 2F, which have standardized frequency distributions due to the filter characteristics $F_1$, $F_{2I}$ and $F_{2Q}$.

In order to compensate for time delays caused by processing the colour difference data through the digital filters 5I, 5Q, 7I and 7Q as described above, there is provided a delay circuit 9 such as a shift register in the transmission path of the luminance data Y. The luminance data Y and the colour difference data $I_4$ and $Q_4$ are supplied to input terminals 11Y, 11I and 11Q of a transmitter 10, which may for example be a digital video tape recorder (VTR) which records the data on a magnetic tape. The digital VTR may be a rotary head type which records the luminance data Y and the colour difference data $I_4$ and $Q_4$ on the magnetic tape as a plurality of parallel slant tracks.

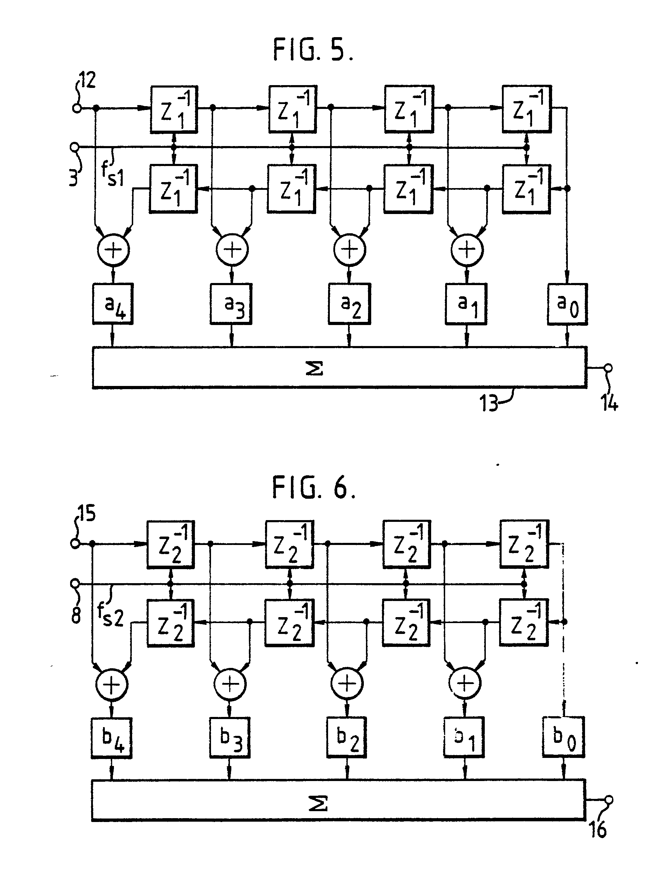

Each of the digital frequency filters 5I and 5Q is a non-recursive type filter of, for example, a finite impulse response (FIR) type. Figure 5 shows one example of such a filter which operates with the clock pulse signal of frequency $f_{s1}$ (which is equal $4f_{sc}$) supplied from the terminal 3. It is constructed such that delay elements are connected in cascade to delay the colour difference data by $1/4f_{sc}$, the colour difference data is supplied to an input terminal 12 connected to one end of the above cascaded delay elements, outputs from predetermined stages thereof are supplied to adders to be digitally added with each other, and the added outputs therefrom are multiplied by coefficients $a_0$ to $a_9$, and then supplied to a digital adder 13. The digital adder 13 has an output terminal 14. By setting the number of connection stages of the delay elements and the impulse response coefficients $a_0$ to $a_9$, the filter characteristic $F_1$ shown in Figure 2B can be achieved.

Moreover, as shown in Figure 6, the digital filter 7I is likewise of the non-recursive type filter of the FIR type which includes an input terminal 15 and an output terminal 16. Delay elements connected in cascade to the input terminal 15 operate with the clock pulse signal of frequency $f_{s2}$ (which is equal to $2f_{sc}$) and have a unit delay time of $1/2f_{sc}$. Each of the delay elements of the digital filter 7I is formed to satisfy a relation for each of the previously mentioned delay elements of the digital filters 5I and 5Q such that if the operators thereof are respectively taken as $Z_1$ and $Z_2$, $Z_2$ is equal to $Z_1^2$. Determining the number of the connection stages of the delay elements and the impulse response coefficients of $b_0$ to $b_9$ achieves the filter characteristic $F_{2I}$ shown in Figure 2E. The digital filter 7Q is similar to that of Figure 6.

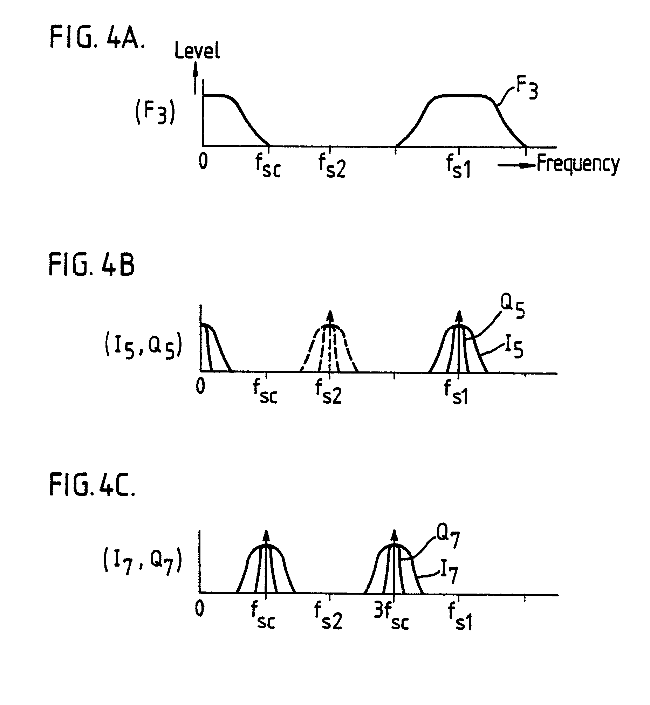

The received (or reproduced) output from the transmitter 10 is processed by an arrangement shown in Figure 3. The luminance data Y and the colour difference data $I_4$ and $Q_4$ appear at terminals 17Y, 17I and 17Q, respectively. The colour difference data $I_4$ and $Q_4$ are the same as those of Figure 2F, which are supplied to interpolation filters 18I and 18Q, respectively. Each of the interpolation filters 18I and 18Q is supplied from a terminal 19 with the clock pulse signal of frequency $f_{s2}$ synchronized with the input data, and is also supplied with the clock pulse signal of frequency $f_{s1}$ from a terminal 20, whereby the sampling rate of the input data is converted from $f_{s2}$ to $f_{s1}$. Both of the interpolation filters 18I and 18Q have a filter characteristic $F_3$ as shown in Figure 4A. Accordingly, the interpolation filters 18I and 18Q respectively produce at their outputs colour difference data $I_5$ and $Q_5$ shown in Figure 4B, which are supplied to a digital encoder 21. The digital encoder 20 is also supplied with the luminance data Y passed through a delay circuit 22, whereby a digitized composite colour video signal is developed at its output terminal 23. In other words, the digital encoder 21 performs the addition of synchronizing and burst signals, and the digital modulation of the two colour difference data $I_5$ and $Q_5$. Since the sampling rate of each of the colour difference data is converted from $f_{s2}$ to $f_{s1}$ by the interpolation filters 18I and 18Q in the previous stages, the digital encoder 21 utilizes the clock pulse signal with the frequency $f_{s1}$ for its data processing.

The modulation of two colour difference data utilizes an orthogonal two-phase modulation which employs the carrier with the frequency of $f_{sc}$. Colour difference data $I_7$ and $Q_7$ appearing at the output of this digital encoder 21 have respectively bands of 0.5 MHz and 1.5 MHz as shown in Figure 4C.

Each of one-dot chain lines in Figures 1 and 3 indicates that the processing rates of the chroma signals are divided or partitioned by the region. In addition, the omission of the digital filter 7I having a relatively broad band width is possible, the pre-filter 5I serving for this purpose. In this case, also, if necessary, it is sufficient to carry out the re-sampling operation for the rate conversion only.

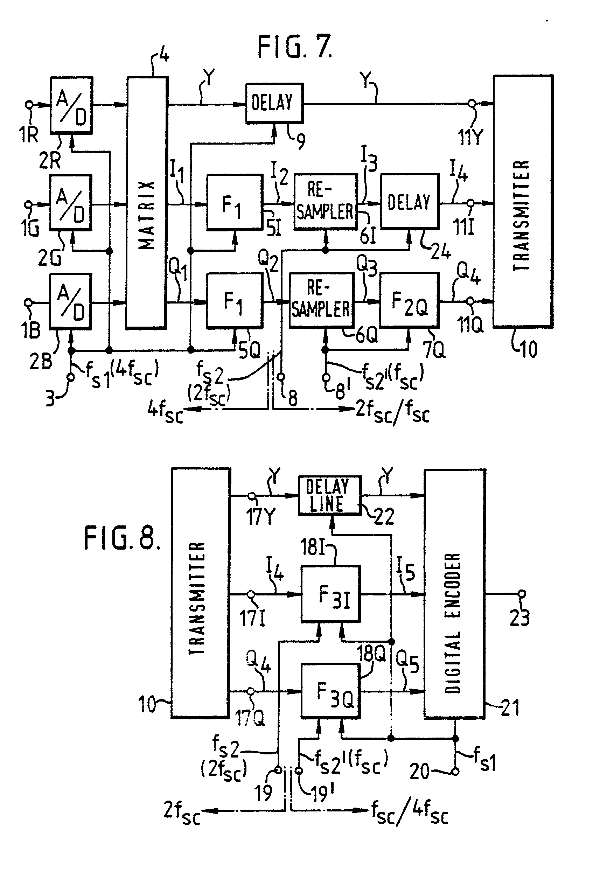

Figures 7 and 8 respectively show the transmitting and receiving sides of another embodiment of colour video signal processing apparatus according to the invention.

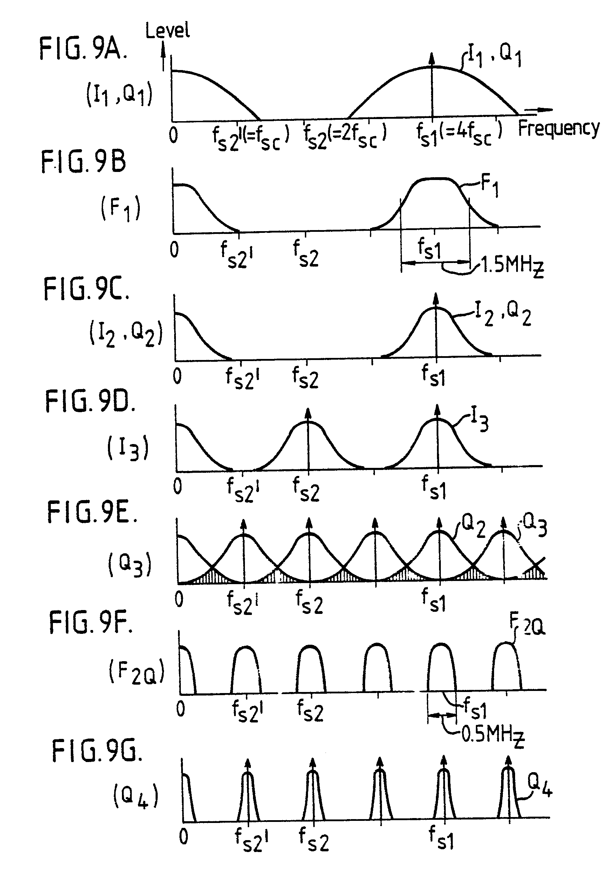

With this embodiment, in Figure 7, at the sampling rate of $f_{s1}$ (which is equal to $4f_{sc}$), the colour difference data $I_1$ and $Q_1$, each having a band shown in Figure 9A are supplied through the digital 5I and 5Q, each having a filter characteristic $F_1$ with a pass band of 1.5 MHz (refer to Figure 9B) to the re-sampling circuits 6I and 6Q. The sampling frequency used in the re-sampling operation is different for the two colour difference data. The colour difference data $I_2$ from the digital filter 5I is re-sampled by the clock pulse signal of $f_{s2}$ (which equals $2f_{sc}$) derived from the terminal 8, while the colour difference data $Q_2$ from the digital filter 5Q is re-sampled by a clock pulse signal of $f_{s2}'$ (which equals $f_{sc}$) derived from a terminal 8'. Accordingly, as shown in Figure 9C, the colour difference data $I_2$ and $Q_2$ whose bands are converted to 1.5 MHz are changed by the re-sampling operations into colour difference data $I_3$ and $Q_3$ as shown in Figures 9D and 9E, respectively. In this case, the sampling side band produced by the re-sampling operation is superimposed upon the original signals thus causing the aliasing noise (shown by hatched regions in Figure 9E).

Since the band of the colour difference data $I_3$ derived from the re-sampling circuit 6I has already been converted to a predetermined band (1.5 MHz) by the digital filter 5I, it is supplied through a delay circuit 24 to the input terminal 11I of the transmitter 10. Whereas, the colour difference data $Q_3$ derived from the re-sampling circuit 6Q is supplied to the digital filter 7Q. The digital filter 7Q operates with the clock pulse signal of frequency $f_{s2}'$ from the terminal 8' and has the filter characteristic $F_{2Q}$ with the pass band of 0.5 MHz as shown in Figure 9F. Therefore, the digital filter 7Q produces at its output the colour difference data $Q_4$ from which the aliasing noise seen in Figure 9E is eliminated and whose band is limited as shown in Figure 9G. The luminance data Y and the colour difference data $I_4$ and $Q_4$ are transmitted or recorded by way of the transmitter 10.

The reason for the different sampling frequencies used in the re-sampling operation of the two colour difference signals as set forth above will now be explained. That is, since it is sufficient that the overall filter characteristic of the filter to pass the colour difference data $I_2$ therethrough is broader than that of the filter for passing therethrough the colour difference data $Q_2$, and the band width of the former is relatively broad, the pre-filter 5I may serve for such purpose alone. If the clock rate of the re-sampling circuit 6I is selected to be low $(f_{sc})$ similarly to the re-sampling circuit 6Q, the output from the re-sampling circuit 6I presents the same spectrum as shown in Figure 9E. Thus, it is impossible to transmit the colour difference signal I with the broad and (1.5 MHz width), from which the aliasing noise is removed.

In general, since the colour difference signal Q is originally sufficient with the narrow band (0.5 MHz), it is desired that the filter 7Q having an abrupt filter characteristic is constructed first and then only the necessary band is selected. Such a filter with an abrupt filter characteristic is operable with a driving clock pulse signal of sufficiently low frequency $(f_{sc})$, so that it can be made easily.

When a particular rate conversion of the signal is not need and hence the sampling frequency of the colour difference data I remains at $f_{s1}$ (which equals $4f_{sc}$), the provision of the re-sampling circuit 6I may not be required. In this case, the pre-filter 5I acts as merely a band filter.

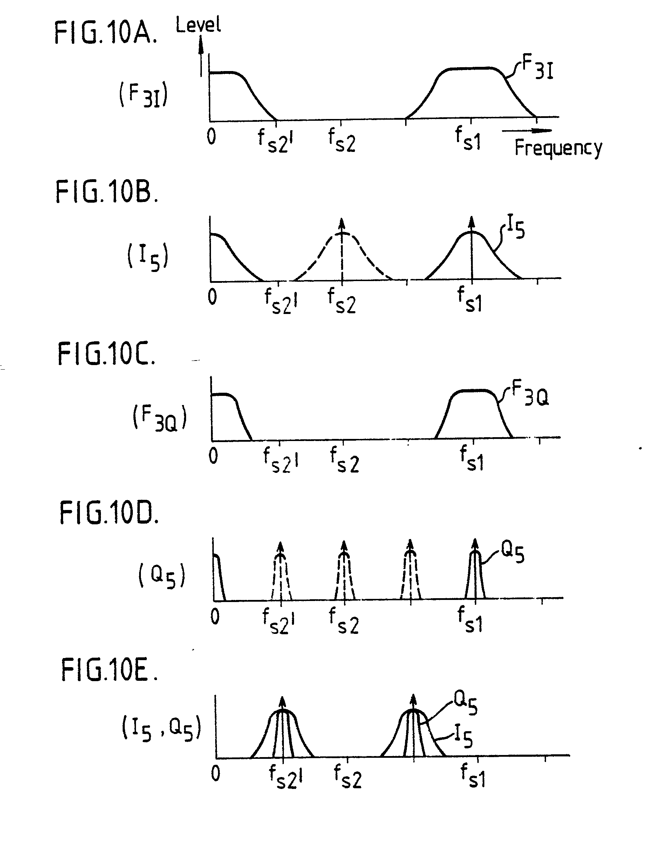

At the receiving side for the transmitter 10, there are provided interpolation filters 18I and 18Q having different filter characteristics $F_{3I}$ and $F_{3Q}$ for the respective colour difference data $I_4$ and $Q_4$ as shown in Figure 8. The interpolation filter 18I operates with a clock pulse signal of frequency $f_{s2}$ derived from the terminal 19 and a clock pulse signal of frequency $f_{s1}$ from the terminal 20, which includes the filter characteristic $F_{3I}$ as shown in Figure 10A. Consequently, it produces the colour difference data $I_5$ from which the unnecessary signal component (shown by a dotted line) is eliminated as illustrated in Figure 10B. Whereas, the interpolation filter 18Q operates with a clock pulse signal of frequency $f_{s2}'$ supplied from a terminal 19' and the clock pulse signal of frequency $f_{s1}$ from the terminal 20, which includes the filter characteristic $F_{3Q}$ shown in Figure 10C. Accordingly, at the output of the interpolation filter 18Q, there appears a colour difference data $Q_5$ whose unnecessary signal component (shown by a dotted line) is eliminated as shown in Figure 10D). The luminance data Y and the colour difference data $I_5$ and $Q_5$ are supplied to the digital encoder 21, which produces at its output terminal 23 the digitized composite colour video signal. Each of colour difference data $I_5$ and $Q_5$ at the output of this digital encoder 21 has such frequency distribution as shown in Figure 10E.

With this embodiment, in order to prevent the aliasing noise from occurring, the digital filters 5I and 5Q are provided at the stage prior to the re-sampling operation to limit the bands of the colour difference data in advance. But, if the signals R, G and B supplied to the input terminals 1R, 1G and 1B are limited in band, it is possible to omit the digital filters 5I and 5Q. By way of example, if charge coupled devices (CCDs), which serve as solid-state imagers, are respectively provided for producing the signals R, G and B and the CCDs are so arranged that the spatial sampling phase is displaced by one half of the arrangement pitch of the picture elements in the horizontal direction between the CCD for the signal G and the other CCDs, limiting the band can be carried out. This method for eliminating the aliasing noise is what is called a spatial offsetting technique, in which as disclosed in US Patent No. 4 069 501, re-issued as No. 30800, the output side band derived from the CCD chip for providing the green colour signal and the output side bands derived from the CCD chips for providing red and blue colour signals become opposite in phase to one another, and when these signals are matrixed so as to form the luminance signal, the unnecessary components are cancelled to eliminate the aliasing noise.

As will be understood from the descriptions of the embodiments so far, since the re-sampling of the signal, the colour difference data are supplied to the digital filters used for limiting the band after their sampling rates $(4f_{sc})$ are decreased to the original processing rate divided by an integer, the decrease of the driving clock frequency of the digital filter becomes possible and the ratio $f_c/f_s$ can be made larger, so this leads to the simplification of the arrangement of the digital filter.

Moreover, when the sampling rate is converted, an appropriate sampling rate can be selected in dependence on the band of the signal to be transmitted.

While in the foregoing embodiments of the invention the signals I and Q are used as the colour difference data, the invention is not necessarily limited to these signals I and Q. Instead, it is possible to employ signals (R—Y)/1.14 and (B—Y)/2.03, and in this case, each of the signal bands is limited to 0.8 MHz.

**Claims**

1. A colour video signal processing apparatus supplied with luminance data and first and second colour difference data, each being digitized at a first sampling frequency and formed by matrix calculations, the apparatus comprising:

sampling means (6I, 6Q) for sampling at least one of said first and second colour difference data at a second sampling frequency which is equal to said first sampling frequency divided by an integer; and

a digital filter (7I, 7Q) to limit the band of the output from said sampling means (6I, 6Q) to be predetermined band;

said luminance data and said first and second colour difference data whose bands have been limited by said digital filter (7I, 7Q) then being transmitted or recorded.

2. Apparatus according to claim 1 wherein said colour difference signal sampled at said second sampling frequency is at least a signal Q component.

3. Apparatus according to claim 1 wherein prior to being sampled at said second sampling frequency, the colour difference signal is passed through a pre-filter (5I, 5Q) so as to prevent aliasing noise from being caused by the sampling operation.

4. Apparatus according to claim 3 wherein the sampling rates of said first and second sampling frequencies are in the ratio 2:1.

5. Apparatus according to claim 1 wherein said first and second colour difference signals are I and Q colour signal components, and the sampling rates of said first and second colour difference signals are such that the sampling rate for the I colour signal component is faster than that for the Q colour signal component.

6. Apparatus according to claim 1 wherein said colour difference signals sampled at said second sampling frequency are R—Y and B—Y signals.

**Patentansprüche**

1. Farbvideosignal-Verarbeitungseinrichtung, der Luminanzdaten sowie erste und zweite Farbdifferenzdaten zugeführt werden, die jeweils bei einer ersten Abtastfrequenz digitalisiert und durch Matrixberechnungen gebildet sind, mit einer Abtasteinrichtung (6I, 6Q) zum Abtasten zumindest der einen der ersten und zweiten Farbdifferenzdaten bei einer zweiten Abtastfrequenz, die gleich der ersten Abtastfrequenz dividiert durch eine ganze Zahl ist, und einem Digitalfilter (7I, 7Q), um die Bandbreite des Ausgangssignals der Abtasteinrichtung (6I, 6Q) auf eine vorbestimmte Bandbreite zu begrenzen, wobei die Luminanzdaten und die ersten und zweiten Farbdifferenzdaten, deren Bandbreiten durch das Digitalfilter (7I, 7Q) begrenzt sind, dann übertragen oder aufgezeichnet werden.

2. Farbvideosignal-Verarbeitungseinrichtung nach Anspruch 1, bei der das Farbdifferenzsignal, das bei der zweiten Abtastfrequenz abgetastet wird, zumindest eine Q-Signal-Komponente ist.

3. Farbvideosignal-Verarbeitungseinrichtung nach Anspruch 1, bei der das Farbdifferenzsignal, bevor es bei der zweiten Abtastfrequenz abgetastet wird, durch ein Vorfilter (5I, 5Q) geleitet wird, um zu verhindern, daß ein verdeckendes Rauschen durch den Abtastvorgang verursacht wird.

4. Farbvideosigal-Verarbeitungseinrichtung nach Anspruch 3, bei der die Abtastraten der ersten und zweiten Abtastfrequenzen im Verhältnis 2:1 stehen.

5. Farbvideosignal-Verarbeitungseinrichtung nach Anspruch 1, bei der die ersten und zweiten Farbdifferenzsignale I- u. Q-Farbsignalkomponenten sind und die Abtastraten der ersten und zweiten Farbfifferenzsignale derart sind, daß die Abtastrate für die I-Farbsignalkomponente höher als diejenige für die Q-Farbsignalkomponente ist.

6. Farbvideosignal-Verarbeitungseinrichtung nach Anspruch 1, bei der die Farbdifferenzsignale, die bei der zweiten Abtastfrequenz abgetastet werden, R—Y- u. B—Y-Signale sind.

**Revendications**

1. Appareil de traitement de signaux vidéo en couleur fournis avec des données de luminance et des premières et des secondes données de différences de couleurs, chacune étant numérisée à une première fréquence d'échantillonnage et formée par des calculs matriciels, l'appareil comportant: un dispositif d'échantillonnage (6I, 6Q) destiné à échantillonner l'une au moins desdites premières et desdites secondes données de différences de couleurs à une seconde fréquence d'échantillonnage qui est égale à la première fréquence d'échantillonnage divisée par un nombre entier, et un filtre numérique (7I, 7Q) destiné à limiter la bande de la sortie dudit dispositif d'échantillonnage (6I, 6Q) à une bande prédéterminée, lesdites données de luminance et lesdites premières et lesdites secondes données de différences de couleurs dont les bandes ont été limitées par ledit filtre numérique (7I, 7Q) étant ensuite transmises ou enregistrées.

2. Appareil selon la revendication 1, dans lequel ledit signal de différence de couleur échantillonné à ladite fréquence d'échantillonnage est au moins une composante du signal (Q).

3. Appareil selon la revendication 1, dans lequel avant l'échantillonnage à ladite seconde fréquence d'échantillonnage, le signal de différence de couleur passe par un pré-filtre (5I, 5Q) de manière à éviter qu' un parasite d'erreur soit causé par l'opération d'échantillonnage.

4. Appareil selon la revendication 3, dans lequel les fréquences d'échantillonnage de ladite première et ladite seconde fréquence d'échantillonnage sont dans le rapport 2:1.

5. Appareil selon la revendication 1, dans lequel ledit premier et ledit second signal de différence de couleur sont des composantes de signaux de couleurs (I et Q) et les fréquences d'échantillonnage desdits premiers et seconds signaux de différence de couleurs sont telles que la fréquence d'échantillonnage pour la composante du signal de couleur (I) est plus élevée que celle de la composante de signal de couleur (Q).

6. Appareil selon la revendication 1, dans lequel lesdits signaux de différences de couleur échantillonés à ladite seconde fréquence d'échantillonnage sont des signaux (R—Y) et (B—Y).

# FIG. 1.

# FIG. 3.

FIG. 2A.

($I_1, Q_1$)

Level

$I_1, Q_1$

0  $f_{sc}$  $f_{s1}$ $(=4f_{sc})$  Frequency

FIG. 2B.

($F_1$)

$F_1$

0  $f_{sc}$  $f_{s1}$

FIG. 2C.

($I_2, Q_2$)

$I_2, Q_2$

0  $f_{sc}$  $f_{s1}$

FIG. 2D.

($I_3, Q_3$)

$I_3, Q_3$

0  $f_{sc}$  $f_{s2}(=2f_{sc})$  $f_{s1}$

FIG. 2E.

$\left(\begin{array}{c} F_{2I} \\ F_{2Q} \end{array}\right)$

$F_{2Q}$
$F_{2I}$

0  $f_{sc}$  $f_{s2}$  $f_{s1}$

FIG. 2F.

($I_4, Q_4$)

$I_4, Q_4$

0  $f_{sc}$  $f_{s2}$  $f_{s1}$

FIG. 2G.

$\left(\begin{array}{c} I_1, Q_1 \\ I_3, Q_3 \end{array}\right)$

$I_3, Q_3$  $I_1, Q_1$

0  $f_{sc}$  $f_{s2}$  $f_{s1}$

**FIG. 4A.**

(F₃)

**FIG. 4B**

(I₅, Q₅)

**FIG. 4C.**

(I₇, Q₇)

# FIG. 5.

# FIG. 6.

FIG. 9A.

(I$_1$, Q$_1$)

Level

$I_1$, $Q_1$

0   $f_{s2}^l (= f_{sc})$   $f_{s2} (= 2f_{sc})$   $f_{s1} (= 4f_{sc})$   Frequency

FIG. 9B

(F$_1$)

$F_1$

0   $f_{s2}^l$   $f_{s2}$   $f_{s1}$   1.5MHz

FIG. 9C.

(I$_2$, Q$_2$)

$I_2$, $Q_2$

0   $f_{s2}^l$   $f_{s2}$   $f_{s1}$

FIG. 9D.

(I$_3$)

$I_3$

0   $f_{s2}^l$   $f_{s2}$   $f_{s1}$

FIG. 9E.

(Q$_3$)

$Q_2$   $Q_3$

0   $f_{s2}^l$   $f_{s2}$   $f_{s1}$

FIG. 9F.

(F$_{2Q}$)

$F_{2Q}$

0   $f_{s2}^l$   $f_{s2}$   $f_{s1}$   0.5MHz

FIG. 9G.

(Q$_4$)

$Q_4$

0   $f_{s2}^l$   $f_{s2}$   $f_{s1}$

FIG.10A.

(F₃ᵢ)

FIG.10B.

(I₅)

FIG.10C.

(F₃Q)

FIG.10D.

(Q₅)

FIG.10E.

(I₅,Q₅)